# EUROPÄISCHE PATENTSCHRIFT

(11) **EP 1 311 418 B1**
(45) Veröffentlichungstag und Bekanntmachung des Hinweises auf die Patenterteilung: **06.10.2004**
(21) Anmeldenummer: 01953837.0
(22) Anmeldetag: 03.07.2001
(51) Int. Cl.: B60T 13/46, B60T 17/22, B60K 25/04

(54) **VERFAHREN, COMPUTERPROGRAMM UND VORRICHTUNG ZUR ÜBERWACHUNG EINER UNTERDRUCKEINRICHTUNG**
METHOD, COMPUTER PROGRAM AND DEVICE FOR MONITORING A VACUUM DEVICE
PROCEDE, PROGRAMME INFORMATIQUE ET DISPOSITIF POUR CONTROLER UN DISPOSITIF A VIDE

(30) Priorität: 16.08.2000 DE 10039787
(43) Veröffentlichungstag der Anmeldung: 21.05.2003
(73) Patentinhaber: Robert Bosch GmbH, 70422 Stuttgart (DE)
(72) Erfinder: WILD, Ernst, 71739 Oberriexingen (DE); EBERLE, Kristina, 71706 Hardthof (DE); REUSCHENBACH, Lutz, 70469 Stuttgart (DE)
(86) Internationale Anmeldenummer: PCT/DE2001/002450
(87) Internationale Veröffentlichungsnummer: WO 2002/014132

(56) Entgegenhaltungen:
- DE-A- 4 444 013
- DE-A- 19 929 880
- US-A- 5 685 697
- PATENT ABSTRACTS OF JAPAN vol. 009, no. 226 (M-412), 12. September 1985 (1985-09-12) & JP 60 082474 A (HITACHI SEISAKUSHO KK), 10. Mai 1985 (1985-05-10)

## Beschreibung

### Stand der Technik

Die vorliegende Erfindung betrifft ein Verfahren zur Überwachung einer Unterdruckeinrichtung eines pneumatisch betriebenen Servoaggregats eines Kraftfahrzeugs, bei dem ein Unterdruckspeicher über eine elektrische Saugpumpe mit Unterdruck beaufschlagt wird.

Ein Verfahren der eingangs genannten Art kommt z.B. zur Überwachung der Unterdruckeinrichtung eines Bremskraftverstärkers zum Einsatz. Üblicherweise wird der Unterdruck im Unterdruckspeicher zwar aus einem Ansaugrohr der Brennkraftmaschine gewonnen; in bestimmten Fällen ist es möglich, dass der im Ansaugrohr der Brennkraftmaschine vorliegende Unterdruck nicht ausreicht, um den für den Betrieb des Servoaggregats notwendigen Unterdruck im Unterdruckspeicher herzustellen. Für diese Fälle ist eine elektrische Saugpumpe vorgesehen, welche zugeschaltet werden kann, um den Unterdruckspeicher entsprechend zu beaufschlagen.

Fällt die Saugpumpe aus oder tritt eine Leckage im System auf, kann dies bisher nur durch zusätzliche Sensoren erfasst werden, welche z.B. auch den Druck in der elektrischen Saugpumpe erfassen. Derartige Sensoren sind jedoch teuer und selbst störungsanfällig.

Aufgabe der vorliegenden Erfindung ist es daher, ein Verfahren der eingangs genannten Art dahingehend weiterzubilden, dass die Überwachung des Unterdruckspeichers preiswert und sicher möglich ist.

Diese Aufgabe wird dadurch gelöst, dass
a) ein Anfangsdruck im Unterdruckspeicher bestimmt wird;
b) nach einem bestimmten Zeitintervall ein Enddruck im Unterdruckspeicher bestimmt wird;
c) die Differenz zwischen Enddruck und Anfangsdruck gebildet und mit einem Grenzwert verglichen wird;
d) bei Unterschreiten des Grenzwerts ein Signal erzeugt wird.

### Vorteile der Erfindung

Bei dem erfindungsgemäßen Verfahren wird der im Unterdruckspeicher eintretende Druckabfall bestimmt, der durch den Betrieb der elektrischen Saugpumpe verursacht wird. Wenn dieser Druckabfall einen bestimmten Wert nicht erreicht, kann davon ausgegangen werden, dass eine Fehlfunktion entweder innerhalb der elektrischen Saugpumpe oder innerhalb der Fluidverbindung zwischen dem Unterdruckspeicher und der elektrischen Saugpumpe oder z.B. eine Leckage im Unterdruckspeicher selbst vorliegt. In diesem Fall wird ein Signal erzeugt, welches zur Auslösung geeigneter Maßnahmen verwendet werden kann. Mit dem erfindungsgemäßen Verfahren ist somit eine Überwachung der Funktion der elektrischen Saugpumpe, der Fluidverbindung und des Unterdruckspeichers möglich, ohne dass ein zusätzlicher Sensor erforderlich ist. Hierdurch können insbesondere bei Großserien erhebliche Kosten eingespart werden.

Vorteilhafte Weiterbildungen des erfindungsgemäßen Verfahrens sind in den Unteransprüchen angegeben.

In Anspruch 2 ist das Verfahren dahingehend weitergebildet, dass der Grenzwert in Abhängigkeit vom Anfangsdruck im Unterdruckspeicher bestimmt wird. Dieser Maßnahme liegt die Überlegung zugrunde, dass die Saugcharakteristik der elektrischen Saugpumpe nicht linear sondern im Allgmeinen exponentiell verläuft. Ist der Anfangsdruck im Unterdruckspeicher bereits relativ nieder, wird in dem bestimmten Zeitintervall durch die elektrische Saugpumpe nur ein geringerer Druckabfall erzielbar sein als bei relativ hohem Anfangsdruck. Dies wird durch die Weiterbildung in Anspruch 2 berücksichtigt, wodurch die Genauigkeit bei der Überwachung erhöht und ein unnötiges Einleiten entsprechender Maßnahmen verhindert wird.

In die gleiche Richtung zielt die Weiterbildung gemäß Anspruch 3, wonach der Grenzwert in Abhängigkeit vom Umgebungsdruck bestimmt wird. Hierdurch wird berücksichtigt, dass die Pumpleistung der elektrischen Saugpumpe vom Umgebungsdruck abhängt, wodurch ebenfalls die Zuverlässigkeit der Überwachung der Unterdruckeinrichtung verbessert wird.

Bei dem in Anspruch 4 angegebenen Verfahren wird der Grenzwert in Abhängigkeit von der Differenz zwischen Umgebungsdruck und Anfangsdruck bestimmt. Die Differenz zwischen Umgebungsdruck und Anfangsdruck ist ein für die Pumpleistung der elektrischen Saugpumpe besonders wichtiger Wert, so dass bei dieser Weiterbildung die Überwachung besonders zuverlässig arbeitet.

Vorteilhaft ist es, wenn gemäß Anspruch 5 der Anfangsdruck bestimmt wird, sobald die Saugpumpe eingeschaltet wird. Hierdurch wird sichergestellt, dass zur Bildung der Differenz zwischen Enddruck und Anfangsdruck ein relativ hoher Anfangsdruck herangezogen wird, bei dem die Pumpleistung der elektrischen Saugpumpe aus den oben genannten Gründen besser ist, so dass ebenfalls eine bessere Zuverlässigkeit der Überwachung erzielt wird.

In Anspruch 6 ist eine Verwendungsmöglichkeit für das erzeugte Signal angegeben, nämlich die Auslösung einer Kontroll- oder Alarmeinrichtung (z.B. einer Warnlampe).

Es sind jedoch auch Bedingungen denkbar, bei denen zwar die Voraussetzungen für die Auslösung einer Kontroll- oder Alarmeinrichtung gegeben sind, die Basis für diese Auslösung jedoch durch besondere Umstände verfälscht ist. Von einer solchen Verfälschung wird gemäß Anspruch 7 dann ausgegangen, wenn mindestens eine der folgenden Bedingungen erfüllt ist:
a) Der Druck in einem mit dem Unterdruckspeicher verbundenen Ansaugrohr einer Verbrennungskraftmaschine ist kleiner als der Druck im Unterdruckspeicher;
b) das Servoaggregat ist betätigt; und/oder
c) der Druck im Unterdruckspeicher ist niedriger als der minimal mögliche Druck in der elektrischen Saugpumpe zuzüglich eines Schwellenwerts.

Die vorliegende Erfindung betrifft in den Ansprüchen 8 und 9 auch ein Computerprogramm, welches zur Durchführung des Verfahrens nach einem der Ansprüche 1 bis 7 geeignet ist, wenn es auf einem Computer ausgeführt wird. Besonders bevorzugt ist dabei, wenn es auf einem Speicher abgespeichert ist, insbesondere auf einem Flash-Memory.

In Anspruch 10 ist eine Vorrichtung zur Überwachung einer Unterdruckeinrichtung eines pneumatisch betriebenen Servoaggregats eines Kraftfahrzeugs genannt, mit einem Unterdruckspeicher der mit einer elektrischen Saugpumpe fluidisch verbunden und mit Unterdruck beaufschlagbar ist. Erfindungsgemäß ist vorgesehen, dass
a) sie einen Anfangsdruck im Unterdruckspeicher (22) erfasst;
b) nach einem bestimmten Zeitintervall einen Enddruck im Unterdruckspeicher (22) erfasst;
c) die Differenz zwischen Enddruck und Anfangsdruck bildet und mit einem Grenzwert vergleicht; und
d) bei Unterschreiten des Grenzwerts ein Signal erzeugt.

Bei der Ausgestaltung gemäß Anspruch 11 ist vorgesehen, dass die Vorrichtung umfasst:
a) Mittel zum Bestimmen des Drucks im Unterdruckspeicher;
b) Mittel zum Erfassen des Beginns eines Evakuierungsvorgangs;
c) einen Zeitgeber, der die seit Beginn des Evakuierungsvorgangs abgelaufene Zeit bestimmt;
d) Mittel zum Speichern des Anfangsdrucks zu Beginn des Evakuierungsvorgangs;
e) einen Subtraktionskreis, der die Differenz zwischen Anfangsdruck und aktuellem Druck im Druckspeicher bildet;
f) zwei Sollwertgeber, von denen der eine ein Zeitintervall und der andere einen Minimalwert für die Differenz zwischen Anfangsdruck und aktuellem Druck im Druckspeicher vorgibt; und
g) einen Komparator, welcher ein Signal erzeugt, wenn die Differenz nach Ablauf des Zeitintervalls kleiner als der Minimalwert ist.

Mit einer solchen Vorrichtung kann das im Anspruch 1 angegebene Verfahren besonders leicht durchgeführt werden.

Gemäß Anspruch 12 wird der Beginn eines Evakuierungsvorgangs dadurch erfasst, dass eine Vorrichtung vorgesehen ist, welche eine das Ansprechen der Pumpe repräsentierende Signalflanke erfasst. Eine solche Vorrichtung ist im Rahmen üblicher elektronischer Schaltungen einfach zu realisieren.

Weitere vorteilhafte Weiterbildungen der erfindungsgemäßen Vorrichtung finden sich in den Ansprüchen 13 bis 15.

### Zeichnung

Nachfolgend werden zwei Ausführungsbeispiele der Erfindung unter Bezugnahme auf die beiliegende Zeichnung im Detail erläutert. In der Zeichnung zeigen:
- Fig. 1:: eine Unterdruckeinrichtung eines Servoaggregats und eine Vorrichtung zu ihrer Überwachung;
- Fig. 2:: ein Ablaufdiagramm eines ersten Ausführungsbeispiels eines Verfahrens, nach dem die Überwachung der in Fig. 1 dargestellten Vorrichtung ablaufen kann; und
- Fig. 3:: ein Ablaufdiagramm eines zweiten Ausführungsbeispiels ähnlich zu dem von Fig. 2.

### Beschreibung der Ausführungsbeispiele

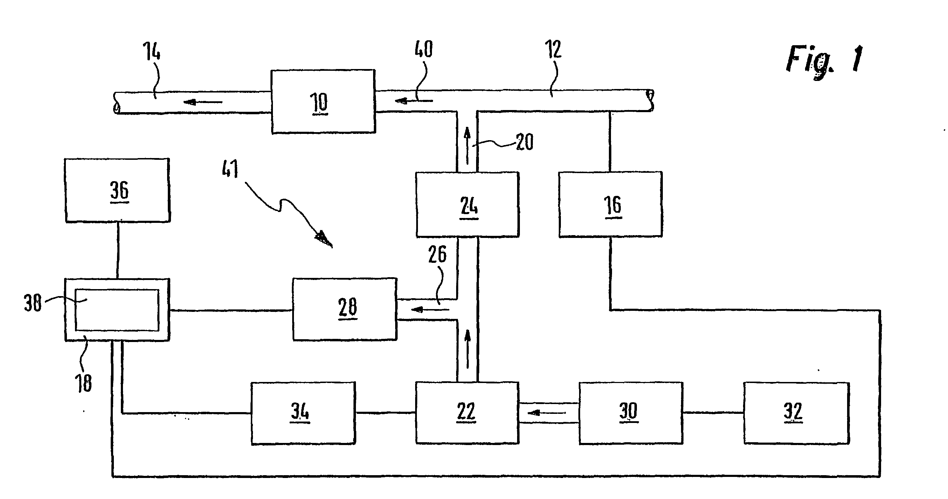

In Fig. 1 trägt eine Brennkraftmaschine das Bezugszeichen 10. Ihr wird Luft (Pfeile 40) aus einer Ansaugleitung 12 zugeführt, und die Abgase werden über eine Abgasleitung 14 abgeführt. Der Druck in der Ansaugleitung 12 wird von einem Drucksensor 16 gemessen, welcher über eine Datenleitung (ohne Bezugszeichen) Signale an eine Steuerelektronik 18 weiterleitet.

Über eine Saugleitung 20 ist ein Unterdruckspeicher 22 mit dem Ansaugrohr 12 fluidisch verbunden. Zwischen Unterdruckspeicher 22 und Ansaugrohr 12 ist ein Rückschlagventil 24 angeordnet, welches eine Strömung nur vom Unterdruckspeicher 22 zum Ansaugrohr 12 hin zulässt.

Zwischen Unterdruckspeicher 22 und Rückschlagventil 24 führt eine Stichleitung 26 von der Saugleitung 20 zu einer elektrischen Saugpumpe 28. Diese wiederum wird über eine Steuerleitung (ohne Bezugszeichen) von der Steuerelektronik 18 angesteuert.

Der Unterdruckspeicher 22 ist fluidisch mit einem ein Servoaggregat darstellenden Bremskraftverstärker 30 verbunden, welcher von einem Bremspedal 32 betätigt wird. Der Druck im Unterdruckspeicher 22 wird von einem Drucksensor 34 gemessen, welcher entsprechende Signale an die Steuerelektronik 18 weiterleitet.

Die Luftströme und ihre Richtungen sind durch Pfeile 40 dargestellt. Die aus Unterdruckspeicher 22, Saugleitung 20, Stichleitung 26 und elektrischer Saugpumpe 28 bestehende Unterdruckeinrichtung trägt insgesamt das Bezugszeichen 41.

Schließlich ist noch ein Umgebungsdrucksensor 36 vorgesehen, welcher ebenfalls über eine Signalleitung (ohne Bezugszeichen) mit der Steuerelektronik 18 verbunden ist. Die Steuerelektronik 18 umfasst einen Read-Only-Memory (ROM) 38, in dem ein Programm abgespeichert ist, nach dem die Überwachung der in Fig. 1 dargestellten Unterdruckeinrichtung 41 erfolgt. Alternativ könnte auch ein Flash-Memory vorgesehen sein.

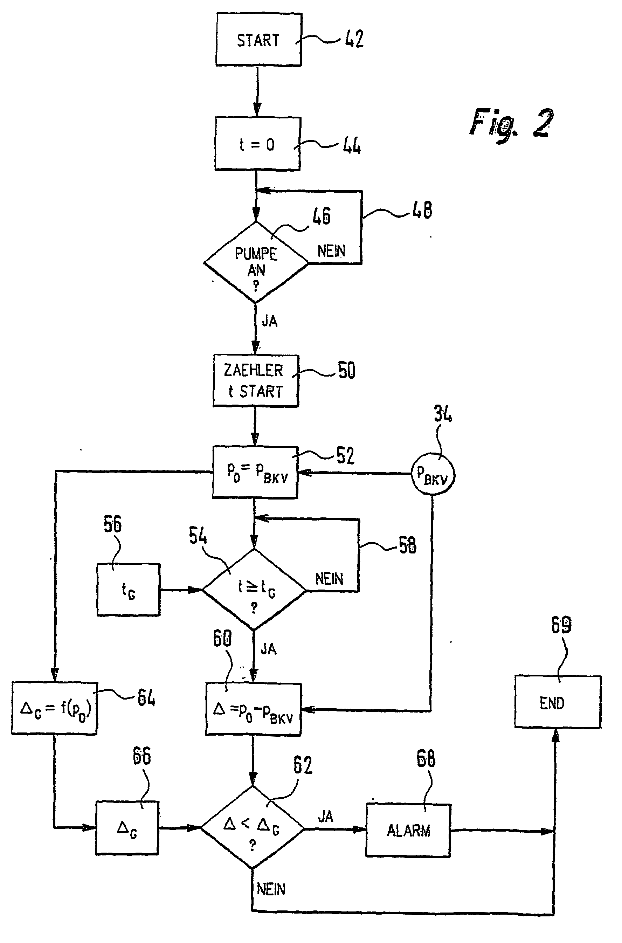

Ein Beispiel für ein solches Programm ist in Fig. 2 dargestellt:

Der Einstieg in das Programm ist durch den Startblock 42 dargestellt. Nach dem Startblock wird ein Zähler für einen Zeitablauf t auf 0 gesetzt (Block 44). Anschließend wird in Block 46 geprüft, ob die elektrische Saugpumpe 28 eingeschaltet ist. Ist die elektrische Saugpumpe 28 ausgeschaltet, verharrt das Programm in einer Warteschleife 48. Ist die Antwort auf die Abfrage in Block 46 jedoch positiv, wird im Block 50 ein Zähler gestartet, welcher die Zeit seit dem Einschalten der Pumpe 28 zählt.

Weiter wird der zum Zeitpunkt des Einschaltens der elektrischen Saugpumpe 28 vom Drucksensor 34 gemessene und im Unterdruckspeicher 22 herrschende Druck p_{BKV} im Block 52 in einen Speicher geladen. Dieser Anfangsdruck hat die Bezeichnung p₀.

Nun wird im Block 54 abgefragt, ob der im Block 50 gestartete Zähler t für die seit Einschalten der elektrischen Saugpumpe 28 abgelaufene Zeit einen Grenzwert t_{G} erreicht oder überschritten hat. Der Grenzwert t_{G} wird von einem Grenzwertgeber 56 bereitgestellt. Ist die durch den Grenzwert t_{G} festgelegte Zeitdauer noch nicht abgelaufen, verharrt das Verfahren in einer Warteschleife 58. Sobald die festgelegte Zeit t_{G} abgelaufen oder überschritten ist, wird im Block 60 die Differenz zwischen dem Anfangsdruck p₀ und dem aktuellen Druck p_{BKV} im Unterdruckspeicher 22 gebildet. Der aktuelle Wert p_{BKV} wird dabei vom Drucksensor 34 bereitgestellt.

Nachfolgend wird im Block 62 abgefragt, ob die im Block 60 berechnete Differenz Δ kleiner als ein Minimalwert Δ_{G} ist. Bei dem Minimalwert Δ_{G} handelt es sich nicht um einen Festwert, sondern um einen variablen Wert, welcher im Block 64 abhängig vom Anfangsdruck p₀ berechnet wird. Er repräsentiert jenen minimalen Druck, der bei intakter Saugpumpe 28 erreicht wird. Die Funktion f(p₀), welche zur Bestimmung des Minimalwerts Δ_{G} verwendet wird, ist dabei so gewählt, dass dann, wenn der Anfangsdruck p₀ bereits relativ niedrig ist und die elektrische Saugpumpe 28 somit nicht mehr im optimalen Betriebsbereich arbeitet, der Minimalwert Δ_{G} kleiner ist als im anderen Falle. Der Minimalwert Δ_{G} ist in einem einen Sollwertgeber darstellenden Sollwertspeicher 66 abgelegt.

Ist das Ergebnis der Prüfung im Block 62 positiv, bedeutet dies, dass der Druckabfall Δ innerhalb der vorgegebenen Zeit t_{G} kleiner war als der minimal geforderte Wert Δ_{G}. Da dies auf eine Fehlfunktion entweder der elektrischen Saugpumpe 28 oder eine Leckage innerhalb der Fluidverbindung zwischen dem Unterdruckspeicher 22 und der elektrischen Saugpumpe 28 oder eine Leckage im Unterdruckspeicher selbst schließen lässt, wird ein Bit gesetzt, welches im Block 68 zur Ausgabe eines Alarmsignals führt.

Anschließend oder im Falle eines negativen Prüfergebnisses im Block 62 endet das Verfahren im Block 69. Von dort kann ggf. ein ereignisgesteuerter Rücksprung zum Startblock 42 erfolgen. Dieser Rücksprung kann auch regelmäßig mit einer bestimmten Taktfrequenz vorgesehen sein.

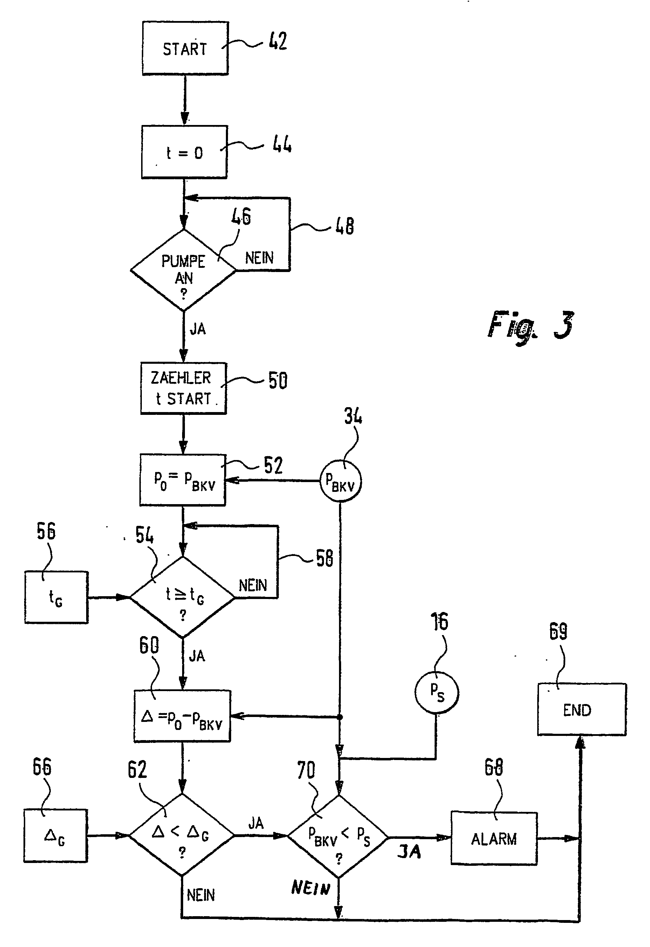

Bei dem in Fig. 3 dargestellten Ablaufdiagramm tragen Blöcke, welche zu solchen Blöcken von Fig. 2 äquivalente Funktionen haben, die gleichen Bezugszeichen. Nachfolgend wird nur auf die zwei wesentlichen Unterschiede zu Fig. 2 eingegangen:

Zum einen handelt es sich bei dem in Fig. 3 dargestellten Ausführungsbeispiel beim Minimalwert Δ_{G} im Block 66 nicht mehr um einen variablen Wert, sondern um einen Festwert. Eine Anpassung des Minimalwerts Δ_{G} an den Anfangsdruck p₀ findet also nicht statt.

Ferner wird bei.einem positiven Abfrageergebnis in Block 62 nicht sofort ein Alarmsignal erzeugt, sondern zunächst im Block 70 abgefragt, ob der tatsächliche Druck p_{BKV} im Unterdruckspeicher 22 kleiner als der Druck p_{S} im Ansaugrohr 12 ist, welcher vom Drucksensor 16 erfasst und dem Block 70 bereitgestellt wird. Wenn das Abfrageergebnis in Block 70 negativ, also der im Ansaugrohr 12 herrschende Druck p_{S} kleiner ist als der im Unterdruckspeicher 23 herrschende Druck p_{BKV}, dann bedeutet dies, dass das Rückschlagventil 24 öffnet und der Unterdruckspeicher 22, die Saugleitung 20, die Stichleitung 26 und hierdurch auch die elektrische Saugpumpe 28 mit dem Ansaugrohr 12 in Fluidverbindung stehen. Hierdurch wird der Druck p_{BKV} im Unterdruckspeicher 22 beeinflusst, so dass keine zuverlässige Aussage im Hinblick auf den Zusammenhang zwischen Betrieb der elektrischen Saugpumpe 28 und Druckabfall im Unterdruckspeicher 22 getroffen werden kann. Daher wird in diesem Fall kein Alarmsignal ausgelöst.

Ist der Druck p_{S} im Ansaugrohr 12 jedoch größer als der Druck p_{BKV} im Unterdruckspeicher 22, dann bleibt das Rückschlagventil 24 geschlossen, und es kann von einer Fehlfunktion innerhalb der Unterdruckeinrichtung 41 ausgegangen werden. Daher wird in diesem Fall im Block 68 ein Alarmsignal erzeugt.

In einem nicht dargestellten Ausführungsbeispiel wird im Block 70 nicht abgefragt, ob der Druck p_{BKV} im Unterdruckspeicher 22 kleiner ist als der im Ansaugrohr 12 herrschende Druck p_{S}, sondern es wird abgefragt, ob das Servoaggregat, also der Bremskraftverstärker 30, durch das Bremspedal 32 betätigt ist. Dies kann z.B. dadurch erfolgen, dass geprüft wird, ob das Bremslicht leuchtet oder nicht. Ferner könnte im Block 70 auch abgeprüft werden, ob der Druck p_{BKV} im Unterdruckspeicher 22 niedriger ist als der minimal mögliche Druck in der elektrischen Saugpumpe 28 zuzüglich eines Schwellenwerts. Der minimal mögliche Druck in der elektrischen Saugpumpe 28 hängt wiederum vom Umgebungsdruck ab, welcher vom Sensor 36 erfasst wird, sowie von den Eigenschaften der elektrischen Saugpumpe 28 selbst.

## Patentansprüche

1. Verfahren zur Überwachung einer Unterdruckeinrichtung eines pneumatisch betriebenen Servoaggregats eines Kraftfahrzeugs, bei dem ein Unterdruckspeicher (22) über eine elektrische Saugpumpe (28) mit Unterdruck beaufschlagt wird, **dadurch gekennzeichnet, dass**
a) ein Anfangsdruck im Unterdruckspeicher (22) bestimmt wird;
b) nach einem bestimmten Zeitintervall ein Enddruck im Unterdruckspeicher (22) bestimmt wird;
c) die Differenz zwischen Enddruck und Anfangsdruck gebildet und mit einem Grenzwert verglichen wird;
d) bei Unterschreiten des Grenzwerts ein Signal erzeugt wird.

2. Verfahren nach Anspruch 1, **dadurch gekennzeichnet, dass** der Grenzwert in Abhängigkeit vom Anfangsdruck im Unterdruckspeicher (22) bestimmt wird.

3. Verfahren nach einem der Ansprüche 1 oder 2, **dadurch gekennzeichnet, dass** der Grenzwert in Abhängigkeit vom Umgebungsdruck bestimmt wird.

4. Verfahren nach den Ansprüchen 2 und 3, **dadurch gekennzeichnet, dass** der Grenzwert in Abhängigkeit von der Differenz zwischen Umgebungsdruck und Anfangsdruck bestimmt wird.

5. Verfahren nach einem der vorhergehenden Ansprüche, **dadurch gekennzeichnet, dass** der Anfangsdruck.bestimmt wird, sobald die Saugpumpe (28) eingeschaltet wird.

6. Verfahren nach einem der vorhergehenden Ansprüche, **dadurch gekennzeichnet, dass** durch das erzeugte Signal eine Kontroll- oder Alarmeinrichtung ausgelöst wird.

7. Verfahren nach Anspruch 6, **dadurch gekennzeichnet, dass** die Auslösung des Kontroll- oder Alarmsignals dann unterdrückt wird, wenn mindestens eine der folgenden Bedingungen erfüllt ist:
a) Der Druck in einem mit dem Unterdruckspeicher (22) verbundenen Ansaugrohr (12) einer Verbrennungskraftmaschine ist kleiner als der Druck im Unterdruckspeicher (22);
b) das Servoaggregat (30) ist betätigt; und/oder
c) der Druck im Unterdruckspeicher (22) ist niedriger als der minimal mögliche Druck in der elektrischen Saugpumpe (28) zuzüglich eines Schwellenwerts.

8. Computerprogramm, **dadurch gekennzeichnet, dass** es das Verfahren nach einem der Ansprüche 1 bis 7 durchführt, wenn es auf einem Computer ausgeführt wird.

9. Computerprogramm nach Anspruch 8, **dadurch gekennzeichnet, dass** es auf einem Speicher abgespeichert ist, insbesondere auf einem Flash-Memory.

10. Vorrichtung zur Überwachung einer Unterdruckeinrichtung (41) eines pneumatisch betriebenen Servoaggregats (30) eines Kraftfahrzeugs, mit einem Unterdruckspeicher (22), der mit einer elektrischen Saugpumpe (28) fluidisch verbunden und mit Unterdruck beaufschlagbar ist, **dadurch gekennzeichnet, dass**
a) sie einen Anfangsdruck im Unterdruckspeicher (22) erfasst;
b) nach einem bestimmten Zeitintervall einen Enddruck im Unterdruckspeicher (22) erfasst;
c) die Differenz zwischen Enddruck und Anfangsdruck bildet und mit einem Grenzwert vergleicht; und
d) bei Unterschreiten des Grenzwerts ein Signal erzeugt.

11. Vorrichtung nach Anspruch 10, **dadurch gekennzeichnet, dass** sie umfasst:
a) Mittel (34) zum Bestimmen des Drucks im Unterdruckspeicher (22);
b) Mittel (46) zum Erfassen des Beginns eines Evakuierungsvorgangs;
c) einen Zeitgeber (54)., der die seit Beginn des Evakuierungsvorgangs abgelaufene Zeit bestimmt;
d) Mittel (52) zum Speichern des Anfangsdrucks zu Beginn des Evakuierungsvorgangs;
e) einen Subtraktionskreis (60), der die Differenz zwischen Anfangsdruck und aktuellem Druck im Druckspeicher (22) bildet;
f) zwei Sollwertgeber (56, 66) von denen der eine ein Zeitintervall und der andere einen Minimalwert für die Differenz zwischen Anfangsdruck und aktuellem Druck im Druckspeicher (22) vorgibt;
g) einen Komparator (62), welcher ein Signal erzeugt, wenn die Differenz nach Ablauf des Zeitintervalls kleiner als der Minimalwert ist.

12. Vorrichtung nach Anspruch 11, **dadurch gekennzeichnet, dass** die Mittel (46) zum Erfassen des Beginns eines Evakuierungsvorgangs eine Vorrichtung umfassen, welche eine das Ansprechen der Pumpe (28) repräsentierende Signalflanke erfasst.

13. Vorrichtung nach einem der Ansprüche 10 bis 12, **dadurch gekennzeichnet, dass** sie einen Rechenkreis (64) umfasst, der eingangsseitig mit den Mitteln zum Speichern des Anfangsdrucks und/oder Mitteln zum Erfassen des Umgebungsdrucks verbunden ist und in dem eine Funktion so verarbeitet wird, dass der Grenzwert in Abhängigkeit vom Anfangsdruck, dem Umgebungsdruck und/oder der Differenz aus Anfangsdruck und Umgebungsdruck bestimmt wird.

14. Vorrichtung nach einem der Ansprüche 10 bis 13, **dadurch gekennzeichnet, dass** sie einen Signalgenerator (68) aufweist, welcher ein Kontroll- und/oder Alarmsignal auslöst, wenn vom Komparator (62) das Signal erzeugt wird.

15. Vorrichtung nach Anspruch 14, **dadurch gekennzeichnet, dass** sie Mittel (70) umfasst, welche die Erzeugung eines Kontroll- oder Alarmsignals unterdrücken, wenn mindestens eine der folgenden Bedingungen erfüllt ist:
a) der Druck in einem mit dem Unterdruckspeicher (22) verbundenen Ansaugrohr (12) einer Verbrennungskraftmaschine (10) ist kleiner als der Druck im Unterdruckspeicher (22);
b) das Servoaggregat (30) ist betätigt; und/oder
c) der Druck im Unterdruckspeicher (22) ist niedriger als der minimal mögliche Druck in der elektrischen Saugpumpe (28) zuzüglich eines Schwellenwerts.

## Claims

1. Method for monitoring a vacuum device of a pneumatically operated booster assembly of a motor vehicle, in which a vacuum accumulator (22) is acted upon by a vacuum via an electric suction pump (28), **characterized in that**
a) an initial pressure in the vacuum accumulator (22) is determined;
b) a final pressure in the vacuum accumulator (22) is determined after a defined time interval;
c) the difference between final pressure and initial pressure is formed and is compared with a limit value;
d) a signal is generated when the limit value is undershot.

2. Method according to Claim 1, **characterized in that** the limit value is determined as a function of the initial pressure in the vacuum accumulator (22).

3. Method according to either of Claims 1 or 2, **characterized in that** the limit value is determined as a function of the ambient pressure.

4. Method according to Claims 2 and 3, **characterized in that** the limit value is determined as a function of the difference between ambient pressure and initial pressure.

5. Method according to one of the preceding claims, **characterized in that** the initial pressure is determined as soon as the suction pump (28) is switched on.

6. Method according to one of the preceding claims, **characterized in that** a check or alarm device is triggered by the generated signal.

7. Method according to Claim 6, **characterized in that** the triggering of the check or alarm signal is suppressed when at least one of the following conditions is fulfilled:
a) the pressure in an intake pipe (12), connected to the vacuum accumulator (22), of an internal combustion engine is lower than the pressure in the vacuum accumulator (22);
b) the booster assembly (30) is actuated; and/or
c) the pressure in the vacuum accumulator (22) is lower than the minimum possible pressure in the electric suction pump (28) plus a threshold value.

8. Computer program, **characterized in that** it carries out the method according to one of Claims 1 to 7 where the latter is executed on a computer.

9. Computer program according to Claim 8, **characterized in that** it is stored in a memory, in particular in a flash memory.

10. Apparatus for monitoring a vacuum device (41) of a pneumatically operated booster assembly (30) of a motor vehicle, with a vacuum accumulator (22) which is fluidically connected to an electric suction pump (28) and can be acted upon by a vacuum, **characterized in that**
a) it detects an initial pressure in the vacuum accumulator (22);
b) it detects a final pressure in the vacuum accumulator (22) after a defined time interval;
c) it forms the difference between final pressure and initial pressure and compares the difference with a limit value; and
d) it generates a signal when the limit value is undershot.

11. Apparatus according to Claim 10, **characterized in that** it comprises:
a) means (34) for determining the pressure in the vacuum accumulator (22);
b) means (46) for detecting the start of an evacuation operation;
c) a timer (54) which determines the time elapsed since the start of the evacuation operation;
d) means (52) for storing the initial pressure at the start of the evacuation operation;
e) a subtraction circuit (60) which forms the difference between initial pressure and current pressure in the vacuum accumulator (22);
f) two desired-value generators (56, 66), of which one stipulates a time interval and the other a minimum value for the difference between initial pressure and current pressure in the vacuum accumulator (22);
g) a comparator (62) which generates a signal when the difference after the time interval has elapsed is lower than the minimum value.

12. Apparatus according to Claim 11, **characterized in that** the means (46) for detecting the start of an evacuation operation comprise a device which detects a signal edge representing the response of the pump (28).

13. Apparatus according to one of Claims 10 to 12, **characterized in that** it comprises a computing circuit (64) which is connected on the input side to the means for storing the initial pressure and/or to the means for detecting the ambient pressure and in which a function is processed in such a way that the limit value is determined as a function of the initial pressure, of the ambient pressure and/or of the difference between initial pressure and ambient pressure.

14. Apparatus according to one of Claims 10 to 13, **characterized in that** it has a signal generator (68) which triggers a check and/or alarm signal when the signal is generated by the comparator (62).

15. Apparatus according to Claim 14, **characterized in that** it comprises means (70) which suppress the generation of a check or alarm signal when at least one of the following conditions is fulfilled:
a) the pressure in an intake pipe (12), connected to the vacuum accumulator (22), of an internal combustion engine (10) is lower than the pressure in the vacuum accumulator (22);
b) the booster assembly (30) is actuated; and/or
c) the pressure in the vacuum accumulator (22) is lower than the minimum possible pressure in the electric suction pump (28) plus a threshold value.

## Revendications

1. Procédé de surveillance d'un dispositif de dépression d'un module d'asservissement pneumatique d'un véhicule automobile, dans lequel un réservoir de dépression(22) est dépressurisé par le biais d'une pompe d'aspiration électrique (28),
**caractérisé en ce que**
a) une pression initiale dans le réservoir (22) est déterminée,
b) après un intervalle de temps donné, une pression finale dans le réservoir (22) est déterminée,
c) la différence entre la pression finale et la pression initiale est formée et comparée avec une valeur limite, et
d) un signal est généré lorsque l'on passe en dessous de la valeur limite.

2. Procédé selon la revendication 1,
**caractérisé en ce que**
la valeur limite est déterminée en fonction de la pression initiale dans le réservoir (22).

3. Procédé selon l'une des revendications 1 ou 2,
**caractérisé en ce que**
la valeur limite est déterminée en fonction de la pression ambiante.

4. Procédé selon les revendications 2 et 3,
**caractérisé en ce que**
la valeur limite est déterminée en fonction de la différence entre la pression ambiante et la pression initiale.

5. Procédé selon l'une des revendications précédentes,
**caractérisé en ce que**
la pression initiale est déterminée dès que la pompe d'aspiration (28) est mise en marche.

6. Procédé selon l'une des revendications précédentes,
**caractérisé en ce qu'**
un dispositif de contrôle ou d'alarme est déclenché par le signal généré.

7. Procédé selon la revendication 6,
**caractérisé en ce que**
le déclenchement du dispositif de contrôle ou d'alarme est alors annulé lorsqu'au moins l'une des conditions suivantes est remplie :
a) la pression régnant dans une tubulure d'admission (12) d'un moteur à combustion interne reliée au réservoir (22) est inférieure à la pression régnant dans le réservoir (22) ;
b) le module d'asservissement (30) est actionné, et/ou
c) la pression dans le réservoir (22) est inférieure à la pression minimale possible dans la pompe d'aspiration électrique (28) plus une valeur de seuil.

8. Programme informatique,
**caractérisé en ce qu'**
il exécute le procédé selon l'une des revendications 1 à 7 lorsque celui-ci est exécuté sur un ordinateur.

9. Programme informatique selon la revendication 8,
**caractérisé en ce qu'**
il est stocké dans une mémoire, en particulier dans une mémoire flash.

10. Dispositif de contrôle d'un dispositif de dépression (41) d'un module d'asservissement pneumatique (30) d'un véhicule automobile, comportant un réservoir de dépression (22) relié de manière fluide à une pompe d'aspiration (28) et dépressurisé,
**caractérisé en ce que**
a) il enregistre une pression initiale dans le réservoir (22) ;
b) après un intervalle de temps donné, il enregistre une pression finale dans le réservoir (22) ;
c) il forme la différence entre la pression finale et la pression initiale et la compare avec une valeur limite ; et
d) il génère un signal lorsque l'on passe en dessous de la valeur limite.

11. Dispositif selon la revendication 10,
**caractérisé en ce qu'**
il comporte :
a) des moyens (34) de détermination de la pression dans le réservoir (22) ;
b) des moyens (46) d'enregistrement du début d'un processus d'évacuation ;
c) un compteur de temps (54) qui détermine le temps écoulé depuis le début du processus d'évacuation ;
d) des moyens (52) de mémorisation de la pression initiale au début du processus d'évacuation ;
e) un circuit de soustraction (60) qui forme la différence entre la pression initiale et la pression actuelle dans le réservoir (22) ;
f) deux indicateurs de valeur de consigne (56, 66), dont l'un prédétermine un intervalle de temps et l'autre une valeur minimale pour la différence entre la pression initiale et la pression actuelle dans le réservoir (22) ;
g) un comparateur (62) qui génère un signal lorsque la différence est inférieure à la valeur minimale après écoulement de l'intervalle de temps.

12. Dispositif selon la revendication 11,
**caractérisé en ce que**
les moyens (46) d'enregistrement du début d'un processus d'évacuation comportent un dispositif qui enregistre une caractéristique de signal représentative de la réaction de la pompe (28).

13. Dispositif selon l'une des revendications 10 à 12,
**caractérisé en ce qu'**
il comprend une cellule de calcul (64) qui, du côté de son entrée, est reliée aux moyens de mémorisation de la pression initiale et/ou aux moyens d'enregistrement de la pression ambiante et qui traite une fonction telle que la valeur limite est déterminée en fonction de la pression initiale, de la pression ambiante et/ou de la différence entre la pression initiale et la pression ambiante.

14. Dispositif selon l'une des revendications 10 à 13,
**caractérisé en ce qu'**
il présente un générateur de signaux (68) qui déclenche un signal de contrôle et/ou d'alarme lorsque le signal est généré par le comparateur (62).

15. Dispositif selon la revendication 14,
**caractérisé en ce qu'**
il comprend des moyens (70) qui annulent la génération d'un signal de contrôle ou d'alarme lorsqu'au moins l'une des conditions suivantes est remplie :
a) la pression régnant dans une tubulure d'admission (12) d'un moteur à combustion interne (10) reliée au réservoir (22) est inférieure à la pression régnant dans le réservoir (22) ;
b) le module d'asservissement (30) est actionné ; et/ou
c) la pression dans le réservoir (22) est inférieure à la pression minimale possible dans la pompe d'aspiration électrique (28) plus une valeur de seuil.
